# EUROPEAN PATENT APPLICATION

(11) **EP 1 231 756 A2**
(43) Date of publication of application: **14.08.2002**
(21) Application number: 02354021.4
(22) Date of filing: 31.01.2002
(51) Int. Cl.: H04L 29/06

(54) **Method and system for maintaining connections in a network**

(30) Priority: 06.02.2001 US 777609
(71) Applicant: Hewlett-Packard Company, A Delaware Corporation, Palo Alto, CA 94304 (US)
(72) Inventor: Baudot, Jacques, 38660 St Vincent de Mercuze (FR); Kwong, Stella, Los Altos, CA 94022 (US); Wong, Issac, San Jos-, CA 95159 (US); Roger, Denis, Route du Martinet d'En Bas 38760 Varces (FR); Sassi, Abdessatar, Cupertino, CA 95014 (US); Brandt, Marc, 38320 Eybens (FR)
(74) Representative: Lloyd, Richard Graham

(57) **Abstract**

The present invention provides a method for hosting a series of active connections between Internet Protocol end-points and a system which hosts at least two processes, each process of the system including a similar instruction set constituting a service application and each process having an IP address, wherein at least one process may adopt an active state where a plurality of connections are used for sending and receiving data while at least one other process may adopt a stand-by state where a plurality of connections are not used for sending and receiving data, the method including :
replicating data from the at least one active process to the at least one stand-by process, the replicated data including status data of the connections of the active process, so that the stand-by process maintains its connections updated with said replicated data, and the replicated data further including status data of the instruction set constituting the service application in the at least one active process, so that the instruction set constituting the service application in the at least one stand-by process remains updated with said replicated data, and
deactivating the IP address of the active process and activating the IP address of the stand-by process in case the active process becomes unavailable.

## Description

### Field of the Invention

The present invention relates to fault tolerant computing and, more particularly, with maintaining network connections established by a fault tolerant platform in, for instance, Internet Protocol (IP) networks.

### Background of the Invention

With the ever increasing growth and popularity of the Internet, there is a corresponding increasing need for Internet equipment that provides high availability to support mission-critical applications that need to run all day, every day. Single points of failure within the network, i.e. components such as gateways and firewalls, that need to be made highly reliable are being reinforced with redundant equipment and various types of clustering systems. However, fault tolerant TCP/IP based systems present problems of message traffic loss and network session reinitialization if efficient fail-over processes are not implemented.

For instance, in order to cope with hardware faults in H.323 Gatekeepers, it is possible to adopt two redundant gatekeepers hosting the same software. Those gatekeepers are both connected to the IP network, receive the same data and produce the same data exactly the same way.

In case of a fault on one of the gatekeepers, the other continues the work alone, without any transition problem as the software status was the same on both gatekeepers just before the fault. However, such devices are expensive and the solution is not entirely satisfactory since software works exactly in the same manner on both systems : a software fault which appears on one of the gatekeepers also appears on the other.

US 6 078 957 proposes a cluster assembly comprising a set of cluster members, each having its own specific connections. Each cluster member has means for recognizing that another cluster member has become inoperative and means for rebalancing some of the tasks that were initially carried out by the cluster member which has become inoperative. If the cluster member which becomes inoperative is a cluster master, the other cluster members immediately reassign the task of being a cluster master to another member of the cluster.

In order to allow a transfer of the connections if a cluster member fails, each cluster member transfers to each of the other cluster members saved essential status information regarding the connections for which that cluster member is responsible. However this system does not address the problem of fault tolerant processes which host an application in direct communication with an IP network. This document thus provides no means for ensuring that such an application would remain at the same stage in the eyes of a connected terminal when a connection is transferred from a cluster element to the other.

The present invention mainly aims at providing a system having connections with IP end points, and a method for dealing with such connections. Nevertheless, it will be understood that the techniques described may be applied to any type of network or protocol of communication, for example in systems with TCP (Transmission Control Protocol) connections, OSI TP (Transaction Processing) connections, or SCTP (Stream Control Transmission Protocol), for instance.

### Summary of the Invention

In brief, this invention provides a method for hosting network connections in a fault tolerant platform having a process in an active state, a process in a standby state and switchover capabilities for promoting a process in the standby state to an active state. The method includes: replicating status data of a network connection of the active process from an active process to a stand-by process; maintaining for the standby process a corresponding standby network connection updated with said replicated data; and during promotion of the standby process to an active state, deactivating the network connection in the active system without closing the connection on the network, transferring the network address to the standby process and activating the corresponding standby connection with that network address, whereby the promoted standby process does not need to reopen the connection on the network.

The maintenance of standby connections in this way enables failover to be achieved with increased transparency to the remote end of the network connection.

Preferably, the step of activating the network address of the stand-by process is carried out before the standby connection is activated and the step of monitoring the connections of the active process and initiating a replication of the status data are carried out during an idle state of the connection.

Advantageously, the step of replicating status data of the connection can be carried out while allowing the active process to use said connection.

According to a second aspect, the present invention provides a fault tolerant platform having a process in an active state, a process in a standby state and switchover means for promoting a process in the standby state to an active state. The platform includes:
a first connection manager for retrieving status data from a connection associated with an active process; a replication manager for replicating status data of a network connection associated with an active process to a stand-by process; a second connection manager for maintaining for the standby process a corresponding standby network connection updated with said replicated data. Finally, the switchover means is arranged, as a part of promotion of a standby process to an active state, to deactivate the network connection in the active system without closing the connection on the network, transfer the network address to the standby process and activate the corresponding standby connection with that network address, whereby the promoted standby process does not need to reopen the connection on the network.

In preferred embodiments, the replication manager and/or the first and/or second connection managers are in the form of a separate software modules.

A third aspect of the invention provides a fault tolerant platform of the above mentioned general type, wherein network connections may assume a first state in which they are closed on the network each time an associated process closes them or dies and a second state in which they are not closed on the network when an associated process closes them or dies. The platform includes an application programming interface that allows connections to be switched under program control between the first state and the second state, and that allows retrieval of connection state information and setting of connection state information. The connection state information is such as to enable a standby network connection that is maintained updated with said state information replicated from an active process to be used by a promoted standby process without a connection needing to be reopened on the network, by transferring a network address to said standby connection.

### Brief Description of the Drawings

Other features, aims and advantages of this invention will appear to those skilled in the art through the following description of preferred embodiments of this invention, and through the appended figures, among which :
- figure 1 diagrammatically illustrates an architecture of a system according to this invention ;
- figure 2 illustrates different states of one of the devices of a system according to this invention;
- figure 3 diagrammatically illustrates a system according to this invention, which includes replication manager modules and connection manager modules.
- figure 4 illustrates different states of a connection in a system according to this invention.
- figure 5 illustrates the processes used for setting up and closing active and standby connections.
- figure 6 illustrates the processes upon death of a process or manual transfer of connections from an active to a standby system.

### Best Mode of Carrying Out the Invention

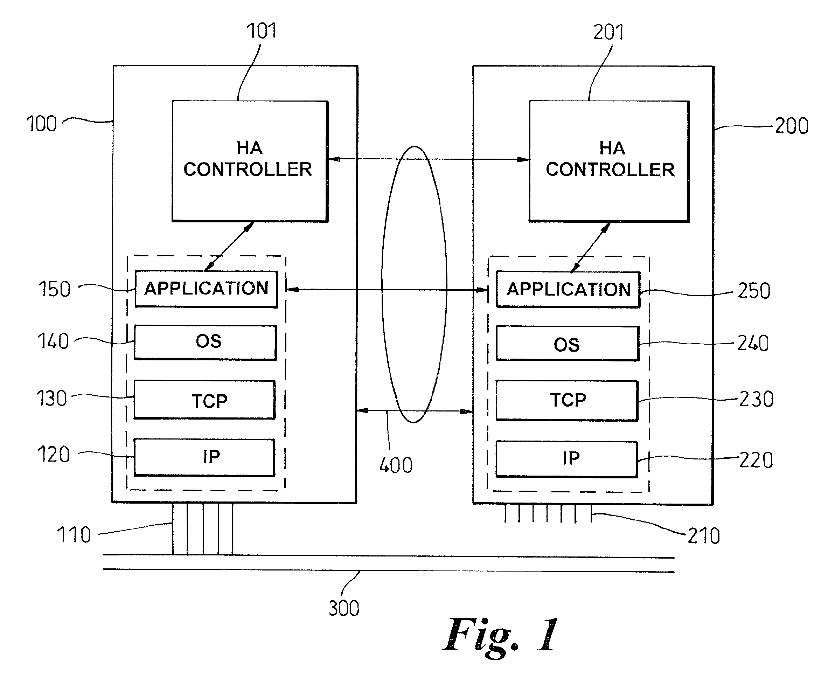

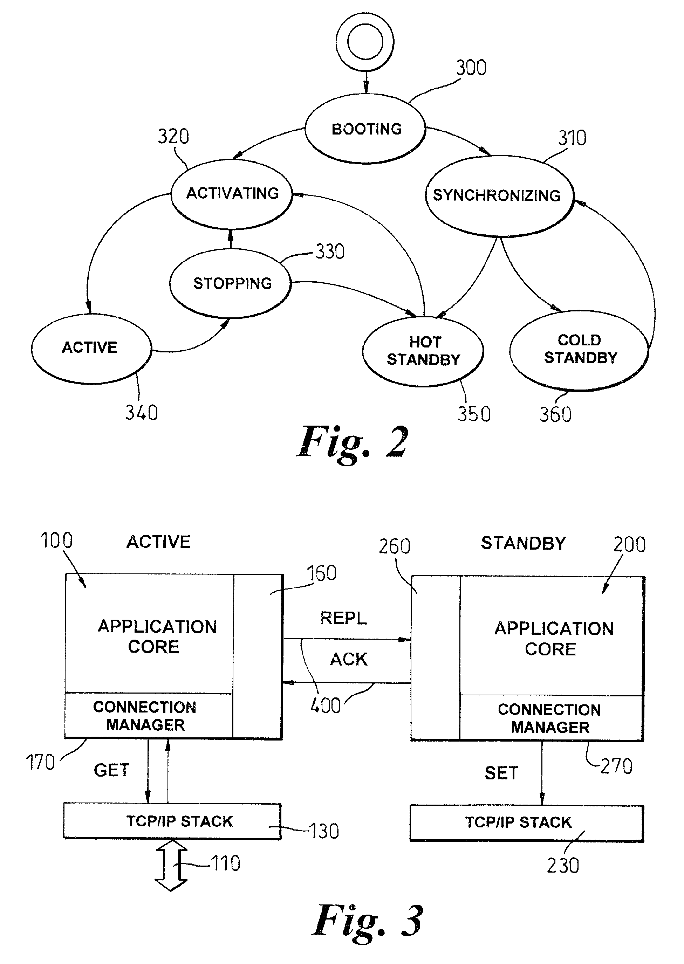

Referring to Fig. 1, there is shown a fault tolerant computer system that includes two hardware devices 100 and 200 both able to be connected to an IP network 300 through connections 110 and 210. The fault tolerant system can be for instance based on a fault tolerant platform of the type described in US Patent N° 5978933 or the OpenCall IN platform marketed by Hewlett-Packard Company. In such systems application monitoring for fault detection and the actions resulting from faults are managed by components ― in particular a High Availability (HA) Controller 101, 201 that are well known as such by those skilled in the art. Fig. 2 shows the state machine employed by the HA controller 101, 201 and the HA processes used by the HP OpenCall IN platform.

In figure 2, some of the states illustrated ― the BOOTING 300, SYNCHRONIZING 310, ACTIVATING 320 and STOPPING 330 states ― are transient states. The process goes through those states only as an intermediary step before reaching a final stable state. Stable states are the ACTIVE 340, HOT STANDBY 350 and COLD STANDBY 360 states. The process can go down at any state, but for simplicity, state transitions to DOWN are not shown in Fig. 2. The OpenCall Fault Tolerant Controller on one device orchestrates the state transitions of the HA processes executing on device 100 taking into account the states of the corresponding processes on the peer device 200.

Devices 100 and 200 in Fig 1 are linked together by a Local Area Network (LAN) 400 and each include at least four software layers 120 to 150 and 220 to 250, which are, from the layer proximate the connections to the layer the most distant from the connections: an Internet Protocol (IP) layer 120, 220, a Transmission Control Protocol (TCP) layer 130, 230, an Operating System layer 140, 240 and an application layer 150, 250.

Application layer 150, 250 carries out different application level services according to the specific purpose of the application concerned, for example one application level function might be updating a prepaid count of communication time in an application to prepaid telecommunications. On each device 100 and 200, processes may be either active or standby. Active processes are the ones that deliver the application services at any particular time. The standby processes serve to take over in case the active ones fail. The application 150 of active device 100 processes the data, while the state of application 250 of standby device 200 is updated by the fault tolerant controller through the local network 400 in a manner known per se.

In the present system, only the TCP connections of one of the systems, such as those 110 of device 100 are active at any one time. The TCP connections on the other system, for instance 210 are stand-by connections, in the sense that they are configured so that they are not able to receive nor send any data. The stand-by device 200 is thus physically connected to the network but is not seen from the Internet Protocol network 300.

A technique for preserving established TCP connections during application switch-over between two devices will now be described. The general approach used is to provide the active application 150 with a replication mechanism to propagate data and status information between the active and the standby connections in order to keep them synchronized. In other words, the application 150 displaces the TCP context from the active device 100 to the stand-by device 200.

In the following, a TCP connection is considered to be preserved if the remote side, i.e. the end-point does not have to reopen it after a switch-over, between device 100 and device 200. The term "active TCP connection", here connections 110, used herein refers to connections that can send and receive packets. The term "standby TCP connection" here connections 210, refers to connections that cannot receive or send any packets until activated. In particular, this means that no packets are sent on behalf of the application by a TCP stack 130, 230 hosting this connection when the connection is opened or closed and no keep alive packets are sent to the remote end of the TCP connection.

Figure 3 illustrates a preferred design that separates the connection management and replication functions, by means of a replication manager module 160, 260 and a connection manager module 170, 270, from the application core 150, 250. Of course, it will be understood that, in other embodiments, the connection and replication manager functionality can be integrated into the application itself or into the operating system.

The connection manager 170, 270 is the single interface used by the application 150, 250 to open, configure, retrieve the state, update the state and close the connections 110, 210. The connection manager 170, 270 can then hide the implementation details of the connection preservation from the core of the application 150, 250 and be reused by other applications wishing to use the connection preservation functionality described herein.

Connection manager 170, 270 is also the preferred place to manage all the preserved connections of an application. As an example, it becomes easy to close, deactivate, or activate all the connections at one time without affecting or needing to know the details of the internals of all the application core modules 150, 250.

The replication manager 160, 260 can provide an abstract replication service for the application hiding the details of how data is sent to the standby and the complex procedure of acknowledging receipt of such data.

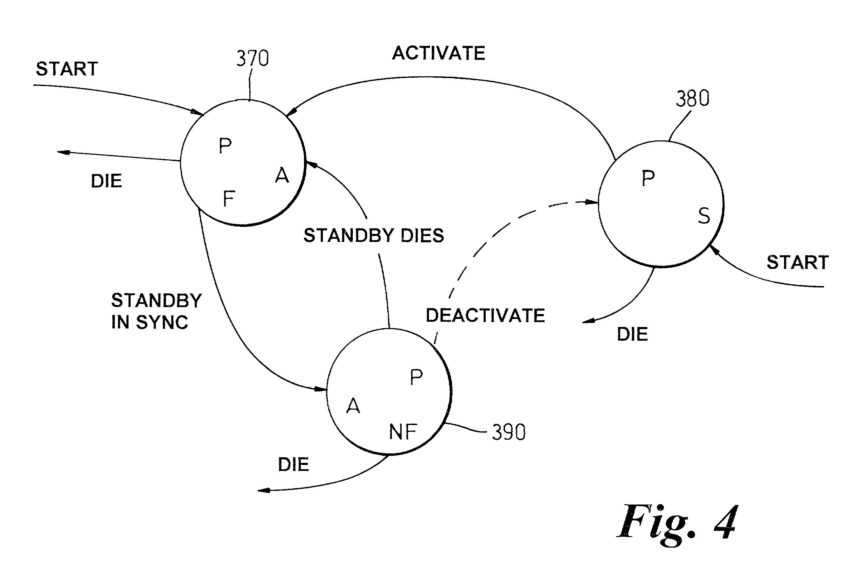

Figure 4 is a state diagram illustrating the different states that a connection can have and the possible state transitions at both the active and the standby sides 100 and 200. The states and the transitions shown in Fig 4 represent the TCP connections from the point of view of application 150.

Each state of the connections can have the following properties attached to it:

P : when present in a state, it indicates that the connection is a preserved connection (as opposed to a normal TCP connection which does not support any of the TCP connection preservation extensions). All three states in Fig 4 are preserved states, other types of connections are not shown.

A : when present in a state, it indicates that the state is an active connection. An active state can carry out data transfer, and has a special behavior during a close operation as indicated by the F/NF flag.

S : when present in a state, it indicates that the state is a standby connection. No packets are sent over such connections even when the connections are closed.

F : when present in a state, it indicates that the TCP connection is terminated on the network with the TCP peer whenever it is locally closed. When combined with the A indicator - as in state 370, the connection acts like a normal TCP connection.

NF : when present in a state, it indicates that the TCP connection is not terminated with the peer TCP whenever it is locally closed upon explicit request by the application or upon process death. The local socket is just silently purged. This option has no effect if the remote TCP peer initiates the termination of the connection. In that case the connection is effectively closed whatever the current option value is. When combined with the A indicator as in state 390, the connection is an active connection that has a corresponding standby connection with which it is synchronised.

When the active application 150 starts and before the standby application 250 is started and synchronized, all the preserved connections it opens are in the active state (state 370). If the active application 150 dies, TCP will close the connections to the remote side on the network. This behavior allows the TCP stack to close the connections to the remote side because no standby application is present to take over the connection processing.

During the synchronization phase to be described in more detail below, the standby application creates a preserved standby connection and replicates the connection state information from the active side. When the synchronization phase is successfully completed, the active application moves all its preserved connections to the state 390 to ensure that the preserved TCP connections are not closed upon the process death, thereby allowing the standby application to take over the connection processing after the switchover. If the application wants to close a connection, it has to move it back to state 370.

Standby connections are in state 380. When such connections are activated they are moved to state 370. Once a new standby system is restarted and synchronized such connections can be moved to state 390.

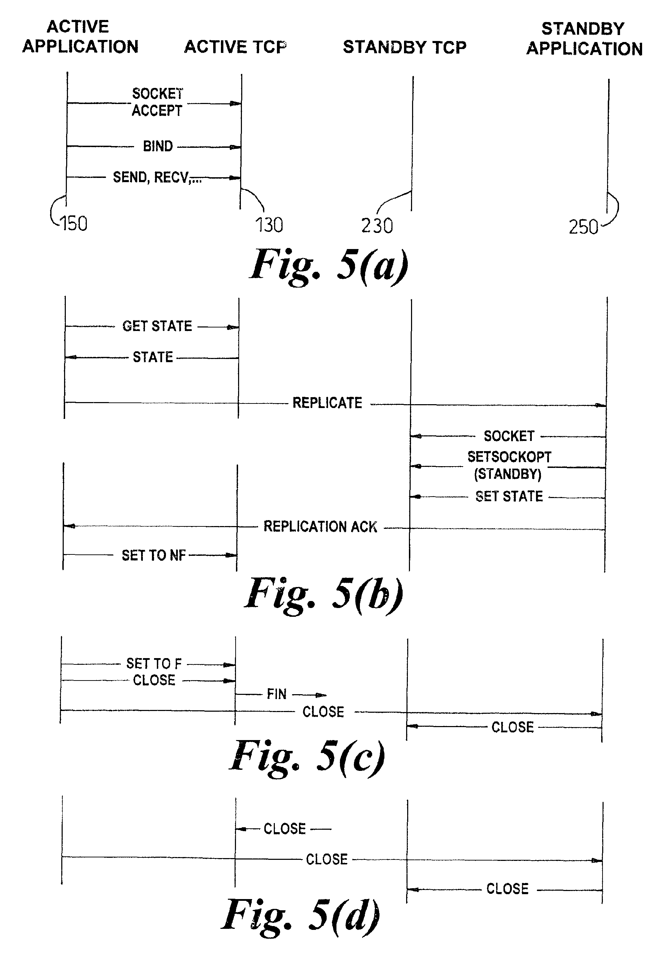

At the active application, sockets are created using the normal socket calls including the socket(), connect(), bind(), listen(), accept() calls. This is shown in Fig 5(a). The active application 150 manages the active connections 110. Most of the information that needs to be replicated between the two devices is maintained by TCP stack modules 130, 230 provided on both devices 100 and 200.

Changes taking place to the connection on the active side are then repeatedly replicated to the standby side through the life of the connection. The replication need not take place every time a packet is received or sent. Rather, it is more efficient to replicate this information only at chosen moments during the connection lifetime where its state is stable. A connection state is stable when no traffic is being processed by the connection (i.e. the connection is idling). A TCP connection 110 is considered idle by the application if there is no pending outbound data and no received data waiting to be read by the application. Such an idle connection can be preserved using the techniques described herein.

When application 150 determines that the connection state is stable (ie the connection is idle), it may decide to replicate the connections 110 to the corresponding standby connections by retrieving the state of each connection from the TCP stack 130 and sending it to the standby application 250. The standby application 250 creates a socket, configures it to a standby socket and updates the socket with the connection state information it received from the active application. Finally it sends an acknowledgment to the active application. This process is illustrated in Fig 5(b). The connection state data are obtained from TCP stack 130 via OS layer 140 by Application layer 150 of the active device 100, and then transmitted to the application layer 250 of the stand-by device 200 through the LAN 400.

Note that during that time, it is preferred that the active application does not wait to receive the ACK from the standby system, the connection merely remains active in state 370. When the ACK is received, the active application configures the socket to never close the connection over the network by setting it to state 390 in Fig 4. It is considered acceptable that if the connection replication on the standby 200 fails, this does not affect the active connections 110. In that case, replication is much faster because the application is not blocked waiting for the standby acknowledgement. In other circumstances it may be preferable to wait for the ACK in order to favor the preservation of established connections 110 to be sure that they are only used by the application when they can be preserved on the standby system 200.

When the active application 150 decides to close the connection 110, it has first to configure it to terminate it with the peer on the network by setting the connection to state 370, then it closes it. The close operation is then replicated to the standby application 250 which closes its standby connection 210. This process is illustrated in Fig 5(c).

If the connection is closed by the remote side, the TCP stack 130 acts like with a normal connection. The active application 150 replicates the close operation to the standby application 250, which in its turn closes the connection. This is illustrated in Fig 5(d).

If the active application 150 dies, the IP address assigned to it is migrated to the standby host before the standby application 250 becomes active. It is possible that the device 100 has only one IP address. However, it is preferred that each active application 150 has its own dedicated IP address that is used by the processes of that application. The IP address of the application is only active on the active device 100 hosting the active application 150. During a switch-over, the IP address is migrated from the old active device 100 to the new active device 200 (i.e. it is deactivated on the old active device and activated on the new one). The IP address is active only on one device at any time.

Techniques for transferring an IP address from one MAC address to another are well known to those in the art and the HP Opencall Product includes an IP address manager component for doing this. A description of such a technique can be found, for example, in US-A-6049825.

The HA process state machine is synchronized with the IP address migration such that during a switch-over, standby processes become active only after the IP address is active on the device and active processes become standby only after the IP address is deactivated on the device. This can be ensured either by communication between the IP address manager and the application or by having the application 200 check the IP address status before activating any standby connections. It will be understood that standard API calls are available to check for IP address status.

Upon the process death, the kernel will close all its file descriptors. As all the replicated active connections were set not to terminate the connection with the peer (state 390), the TCP stack 130 will not indicate to the remote side of the connection that the connection has been closed.

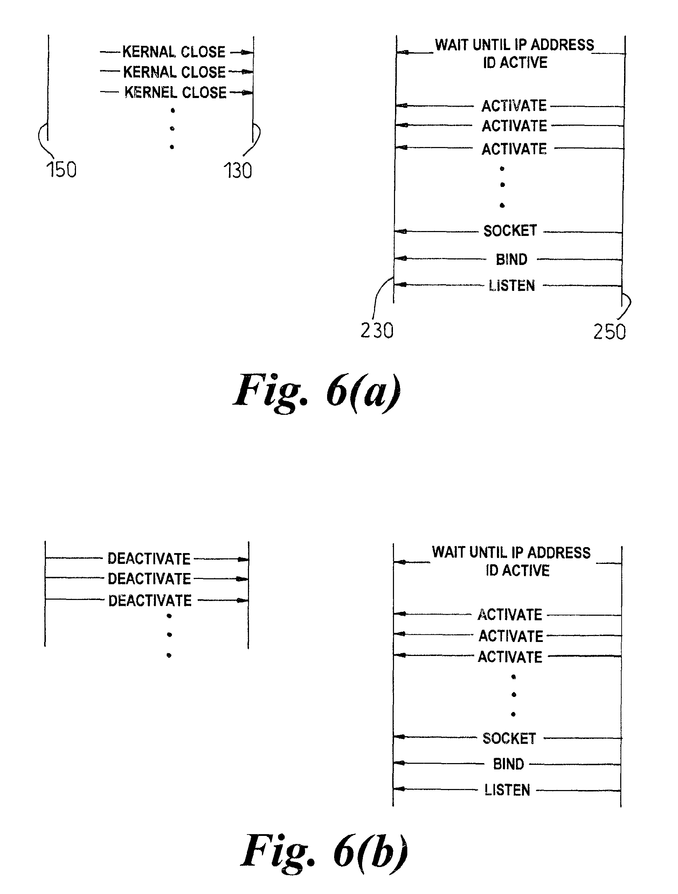

At the same time, the standby, which has been notified of the failure by the high availability controller, waits until the IP address is activated on the device. Then, it starts activating its standby connections and opening its listen connections. Note that after activation, the connections may have to remain in state 370 until a new standby system is restarted and synchronized. These processes are illustrated in Fig 6(a) and in the preferred embodiment, they take place during the ACTIVATING state 320 shown in Fig 2.

When a standby socket goes active, the TCP connection determines if it is still in sync with its TCP peer. If the active TCP connection had received data since the last sync point, the standby TCP will be out of synchronisation. In that case, the TCP connection will be closed and recreated by the standby application.

In case of a manual switchover (i.e. a switchover not provoked by a process dying), for example in the case of preventive maintenance or to allow software or hardware upgrades, the active application 100 deactivates all its connections and becomes standby, while the standby application 200 activates all its connections and becomes active. This manual switchover is shown in Fig 6(b) and in the preferred embodiment, the process takes place in "Stopping" state 330 shown in Fig 2.

Note that sockets used to listen do not need to be preserved because they do not form part of a connection. To handle listen sockets established by the active process, the standby process can adopt one of two strategies: First, the standby process can re-create the listen socket when it switches to an active process state. This can be done by executing the socket function sequence: socket(), bind(), listen() and accept(). Generally, this approach is considered the safest and simplest. Alternatively, however the standby process could create a listen socket and bind the listen socket to any IP address (IP address = INADDR_ANY), and a specified port number. This will save the steps of re-creating the listen socket, but the standby process will have to handle the possibility of connection requests when it is still in a standby mode (for an IP address active on the device).

If the TCP connection 110 is not idle at the time a switchover occurs the connection 110 will be terminated and will need to be recreated by the standby application.

As will be described in more detail below, in the preferred embodiment an extended socket Application Programming Interface (API) is provided to allow the application to control the connection properties, retrieve its state on the active side and update it on the standby side. This API can be, for example, conveniently implemented in the form of modules such as connection manager 170, 270 and replication manager 160, 260 which are separate from and called by the application. The API is situated between the application 150, 250 and the operating system 140, 240, in reference to the software hierarchy in reference to a base which can be the IP layer 120, 220 or the TCP layer 130, 230 shown in Figure 1. The state of each connection 110 includes in particular TCP data and OS data.

The preferred embodiment consists of additions to a standard HP-UX socket and related calls. In particular, the **getsockopt()** call is extended to return the TCP state information required to build a similar connected/established socket. It can be performed on an active or standby socket and is a read only operation that does not affect the socket or the connection. The same call is used to set the socket from state 370 to 390 and vice versa.

The nature of the state information will vary according to platform and is selected such as to enable a standby socket to be updated with the information to be used by a standby process that is activated without a connection needing to be reopened on the network.

The **setsockopt()** call is extended to enable resynchronization of a standby socket with the TCP state information obtained from an active socket. It can only be done on a standby socket and affects all required layers. The **setsockopt()** call is performed after socket() to create a standby socket connection. It is called on an active connection to make it standby (deactivate). It is called on a standby connection to make it active.

Referring back to Fig 3, in a preferred embodiment, Connection Manager 170 keeps track of all the open connections 110 and their state in a single place. The Connection Manager 170 can perform operations on multiple connections 110 simultaneously, e.g. close all the connections, replicate all the connections, activate/deactivate all the connections. The connection manager 170 can set a special flag in the connection 110 to indicate if it has been replicated or not, then just by looping over the connections table it replicates the not yet replicated ones. It is preferred that Connection Manager 170 be multi-threaded to avoid blocking the application 150 for long periods while replicating, activating, or retrieving getting the state, of connections being used by application 150.

The application 150 retrieves the TCP connection states and transmits them to the stand-by application 250. The stand-by application 250 then sends the state data to the TCP layer 230 of the stand-by device 200.

It will be understood that the software fault fail-over techniques described herein are not limited to implementation using a separate standby device. Rather, the methods described can equally be applied to application software fail-over to a standby application on the same device. If an application monitor can determine the fault is in the application itself, it can opt to fail-over locally.

There has been described a system including two processes, each process hosting a similar service application set of instructions, each process having an IP address, and each process being able to host a series of active connections with Internet Protocol end-points, wherein the system includes means to host a series of active connections in one active process while hosting no active connections in the other process, and wherein the system includes means for replicating data from the active process to the other one, data which include status data of the active connections so that said other process maintains updated stand-by connections, and data which include status data of said service application set of instructions of the active process so that said set of instructions of said other process remains updated, and wherein the system includes means to deactivate the IP address of the active process and activate the IP address of said other process in case the active process becomes unavailable.

Although a specific embodiment of the invention has been described, the invention is not to be limited to the specific arrangement so described. The invention is limited only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. A method for hosting network connections in a fault tolerant platform having a process in an active state, a process in a standby state and switchover capabilities for promoting a process in the standby state to an active state, the method including:
replicating status data of a network connection of the active process from an active process to a stand-by process;
maintaining for the standby process a corresponding standby network connection updated with said replicated data; and
during promotion of the standby process to an active state, deactivating the network connection in the active system without closing the connection on the network, transferring the network address to the standby process and activating the corresponding standby connection with that network address, whereby the promoted standby process does not need to reopen the connection on the network.

2. The method of claim 1, the step of activating the network address of the stand-by process is carried out before the standby connection is activated.

3. The method of claim 1, including the step of monitoring the connections of the active process and initiating a replication of the status data in response to identifying an idle state of the connection.

4. The method of claim 1, wherein the step of replicating status data of the connection is carried out while allowing the active process to use said connection.

5. A method as claimed in claim 1 comprising maintaining multiple pairs of active and standby processes each having a different network address.

6. A method as claimed in claim 1 wherein the network addresses are Internet protocol (IP) addresses.

7. A fault tolerant platform having a process in an active state, a process in a standby state and switchover means for promoting a process in the standby state to an active state, the platform including:
a first connection manager for retrieving status data from a connection associated with an active process;
a replication manager for replicating status data of a network connection associated with an active process to a stand-by process;
a second connection manager for maintaining for the standby process a corresponding standby network connection updated with said replicated data; and
wherein the switchover means is arranged, as a part of promotion of a standby process to an active state, to deactivate the network connection in the active system without closing the connection on the network, transfer the network address to the standby process and activate the corresponding standby connection with that network address, whereby the promoted standby process does not need to reopen the connection on the network.

8. A platform as claimed in claim 7, wherein the replication manager is in the form of a separate software module.

9. A platform as claimed in claim 7, wherein the first and/or second connection manager is in the form of a separate software module.

10. A platform as claimed in claim 7, wherein each process hosts an application software layer forming said set of instructions, an operating system software layer, and a software layer which is able to apply a protocol of transmission control, and wherein the system hosts a process able to replicate the status data of the active connections, which process is at least in part carried out by the application layer of the active process.

11. The platform of claim 7, comprising maintaining multiple pairs of active and standby processes each having a different network address.

12. A platform as claimed in claim 7 wherein the network addresses are IP addresses.

13. A fault tolerant platform having means to support a process in an active state, means to support a process in a standby state and switchover capabilities for promoting a process in the standby state to an active state, wherein network connections may assume a first state in which they are closed on the network each time an associated process closes them or dies and a second state in which they are not closed on the network when an associated process closes them or dies, the platform including an application programming interface that allows connections to be switched under program control between the first state and the second state, and that allows retrieval of connection state information and setting of connection state information, the connection state information being such as to enable a standby network connection that is maintained updated with said state information replicated from an active process to be used by a promoted standby process without a connection needing to be reopened on the network, by transferring a network address to said standby connection.

14. A method for hosting network connections in a fault tolerant platform having a process in an active state, a process in a standby state and switchover capabilities for promoting a process in the standby state to an active state, the method including:
replicating status data of a network connection of the active process from an active process to a stand-by process;
maintaining for the standby process a corresponding standby network connection updated with said replicated data;
promoting a process in the standby state to an active state and, during promotion of the standby process to an active state, deactivating the network connection in the active system without closing the connection on the network, transferring the network address to the standby process and activating the corresponding standby network connection with that network address, such that the promoted standby process does not need to reopen the connection on the network.

15. A method for hosting Internet protocol (IP) network connections in a fault tolerant platform having a process in an active state, a process in a standby state and switchover capabilities for promoting a process in the standby state to an active state, the method including:
replicating status data of a network connection of the active process from an active process to a stand-by process;
maintaining for the standby process a corresponding standby network connection updated with said replicated data;
promoting a process in the standby state to an active state and, during promotion of the standby process to an active state, deactivating the network connection in the active system without closing the connection on the network, transferring the IP network address to the standby process and activating the corresponding standby network connection with that IP network address, such that the promoted standby process does not need to reopen the connection on the network, and wherein the step of activating the network address of the standby process is carried out before the standby connection is activated.
